# FASCICULE DE BREVET EUROPEEN

(11) **EP 1 293 389 B1**
(45) Date de publication et mention de la délivrance du brevet: **03.09.2008**
(21) Numéro de dépôt: 02292256.1
(22) Date de dépôt: 13.09.2002
(51) Int. Cl.: B60R 19/12

(54) **Système d'absorption d'énergie pour véhicule automobile**
Energieaufnehmende Einrichtung für ein Kraftfahrzeug
Motor vehicle energy absorbtion system

(30) Priorité: 14.09.2001 FR 0111947
(43) Date de publication de la demande: 19.03.2003
(73) Titulaire: COMPAGNIE PLASTIC OMNIUM, 69007 Lyon (FR)
(72) Inventeur: Pierrot, Frédéric, 01150 Lagnieu (FR); Cheron, Hugues, 01800 Meximieux (FR); Roussel, Thierry, 52500 Fayl la Forêt (FR); Malteste, Stéphane, 01800 Meximieux (FR)
(74) Mandataire: Remy, Vincent Noel Paul

(56) Documents cités:
- EP-A- 1 065 108
- EP-A- 1 072 476
- WO-A-01/00478

## Description

La présente invention concerne un système d'absorption d'énergie pour véhicule automobile.

On sait que les véhicules automobiles sont de plus en plus rigides dans le double but de limiter le coût de leur réparation et de mieux protéger leurs passagers en cas de choc.

De ce fait, la quasi intégralité de l'énergie à dissiper lors d'un choc du véhicule est concentrée sur ses longerons, à l'extrémité desquels sont disposés des systèmes d'absorption d'énergie dont la fonction est d'absorber les efforts de manière plus ou moins progressive.

Ces précautions connaissent néanmoins une limite du fait qu'elles ne prennent en compte que des chocs entre un véhicule et un obstacle lisse vertical tel qu'un mur.

Par exemple, le brevet EP 1 065 108 décrit un système d'absorption d'énergie pour véhicule automobile muni de longerons, le système comportant une poutre supérieure et une poutre basse horizontales, ainsi que des jambages verticaux assurant une liaison rigide entre la poutre supérieure et la poutre basse la poutre supérieure étant en appui contre les longerons du véhicule. La poutre basse est destinée à traiter des chocs piéton, et ne permet pas d'absorber l'énergie des chocs que la présente invention vise à traiter.

Il subsiste donc une difficulté quant aux autres types de chocs que ceux avec un mur et notamment quant aux chocs entre véhicules. En effet, dans ce dernier cas, la rigidification accrue des structures constitue en elle-même un facteur d'augmentation de risque car ces structures deviennent des objets d'autant plus agressifs et intrusifs qu'ils sont rigides.

La présente invention vise à résoudre cet inconvénient.

La présente invention a pour objet un système d'absorption d'énergie pour véhicule automobile le véhicule automobile comportant des longerons et un berceau moteur, le système comportant une poutre supérieure, une poutre basse et des jambages assurant une liaison rigide entre la poutre supérieure et la poutre basse, la poutre supérieure étant en appui contre les longerons du véhicule, caractérisé en ce que la poutre basse est en appui contre des prolonges du berceau moteur.

Le cadre (poutre supérieure, poutre basse et jambages) constituant le système d'absorption d'énergie selon l'invention permet d'éviter que deux véhicules qui s'entrechoquent ne voient leurs poutres ou leurs longerons s'entremêler. Les structures rigides de chaque véhicule ne risquent ainsi plus de constituer des pièces intrusives particulièrement dangereuses et destructrices pour l'autre véhicule.

En d'autres termes, le cadre disposé sur chacun des véhicules entrant en collision oblige les systèmes d'absorption d'énergie des deux véhicules à se rencontrer et à absorber l'énergie du choc.

La présente invention est particulièrement avantageuse en ce qu'elle assure une bonne répartition des efforts sur la structure du véhicule, et ce même en l'absence de normalisation en matière de hauteur de poutre ou d'écartement de longerons sur les véhicules.

Un autre avantage du système d'absorption d'énergie selon l'invention est qu'il offre une surface de choc plus grande à l'avant du véhicule et notamment selon la direction verticale, ce qui non seulement répartit mieux les efforts sur la structure du véhicule, comme déjà expliqué, mais également contribue à la préservation des jambes d'un piéton, en fournissant une poutre basse particulièrement adaptée à l'absorption d'un choc piéton, comme cela est connu notamment de la demande de brevet EP 1038732.

Le système d'absorption d'énergie selon l'invention peut également être considéré comme un complément rigidifiant de la structure du véhicule, compte-tenu de sa structure en cadre rigide reliant les longerons au berceau moteur.

Dans un mode de réalisation particulier de l'invention, la poutre supérieure et/ou la poutre basse sont réalisées en matériaux composites, par exemple à l'aide d'une feuille de matériau de renfort comme celui connu sous l'appellation TWINTEX^{®}, commercialisé par la société VETROTEX, tandis que les jambages sont réalisés en polypropylène injecté.

Dans un autre mode de réalisation de l'invention, les poutres sont réalisées en aluminium extrudé plié.

Quelque soit la matière utilisée pour la réaliser, il est avantageux qu'au moins une poutre du système d'absorption d'énergie selon l'invention présente une section transversale du type en U, c'est-à-dire avec deux ailes latérales définissant un espace intérieur à la poutre débouchant vers l'extérieur par les bords libres desdites ailes.

Une section "du type en U" selon l'invention peut être, en particulier, une section en U, en V ou en W.

Dans un mode de réalisation préféré de l'invention, l'ouverture longitudinale de la poutre est tournée vers l'avant du véhicule, une fois le système d'absorption monté sur ledit véhicule.

Cette disposition présente l'avantage que la poutre est alors fixée au véhicule par sa paroi opposée à l'ouverture et qu'en cas de choc, ses deux ailes latérales s'écartent tandis que la poutre s'écrase, de sorte que la poutre offre ainsi une plus grande surface d'appui pour les objets à impacter.

De plus, l'ouverture de la poutre étant tournée vers l'extérieur du véhicule, on peut facilement loger une partie incompressible des absorbeurs dans son espace intérieur.

Chaque jambage du système d'absorption selon l'invention comporte de préférence un réseau de nervures de rigidification.

Dans une variante avantageuse, chaque jambage comporte une partie se superposant à au moins une des poutres, partie dans laquelle il est de préférence constitué en nid d'abeilles afin de former une zone d'absorption d'énergie.

Dans un autre mode de réalisation particulier, compatible avec les précédents, chaque jambage comporte des excroissances venant dans le prolongement des poutres , chaque excroissance constituant une zone d'absorption d'énergie destinée à absorber les chocs en coin du véhicule.

Conformément à l'invention, les jambages se fixent sur les poutres de différentes manières.

Dans un premier mode de réalisation, chaque jambage se fixe sur chaque poutre à l'extérieur de celle-ci. Dans ce cas, le jambage se situe à l'extrémité des poutres et peut constituer un absorbeur pour les chocs en coin du véhicule.

Dans un deuxième mode de réalisation, chaque jambage s'emboîte dans l'une au moins des poutres, de préférence par l'avant de celle-ci, c'est-à-dire par l'extérieur du véhicule, ce qui facilite ledit emboîtement.

Selon une autre forme de réalisation, la poutre basse est réalisée d'un seul tenant avec les jambages, ce qui élimine la difficulté consistant à fixer rigidement les jambages à la poutre basse.

Dans une autre forme de réalisation de l'invention, la poutre basse et/ou les jambages résultent de l'assemblage d'un absorbeur destiné à résister à la compression en cas de choc et d'une portion d'une pièce renforcée qui double l'absorbeur et prend appui sur la structure du véhicule.

Selon une autre forme de réalisation de l'invention, le cadre est constitué par une pièce monobloc réalisée d'un seul tenant.

L'invention peut en outre comporter l'une ou plusieurs des caractéristiques suivantes :
- la poutre supérieure et la poutre basse sont sensiblement horizontales ;
- les jambages sont sensiblement verticaux.

Afin de faciliter la compréhension de l'invention, on va maintenant en décrire différents modes de réalisation, à l'aide des dessins annexés dans lesquels :
- la figure 1 est une vue en perspective de la moitié avant gauche d'un cadre selon l'invention,
- la figure 2 est une vue analogue à la figure 1 représentant uniquement le jambage du cadre,
- la figure 3 est une vue de la moitié avant gauche d'un autre cadre selon l'invention,
- la figure 4 est une vue éclatée analogue à la figure 3,
- la figure 5 est une vue de la moitié avant gauche d'un autre cadre selon l'invention,
- la figure 6 est une vue analogue à la figure 5 montrant uniquement le jambage du cadre,
- la figure 7 est une vue en perspective éclatée de la moitié avant gauche d'un autre cadre selon l'invention,
- la figure 8 est une vue analogue à la figure 7 montrant le jambage seul,
- la figure 9 est une vue de face du cadre de la figure 7,
- la figure 10 est une vue en perspective de la moitié avant gauche d'un autre cadre selon l'invention,
- la figure 11 est une vue éclatée de côté de la figure 10,
- la figure 12 est une vue en perspective d'un autre cadre selon l'invention.

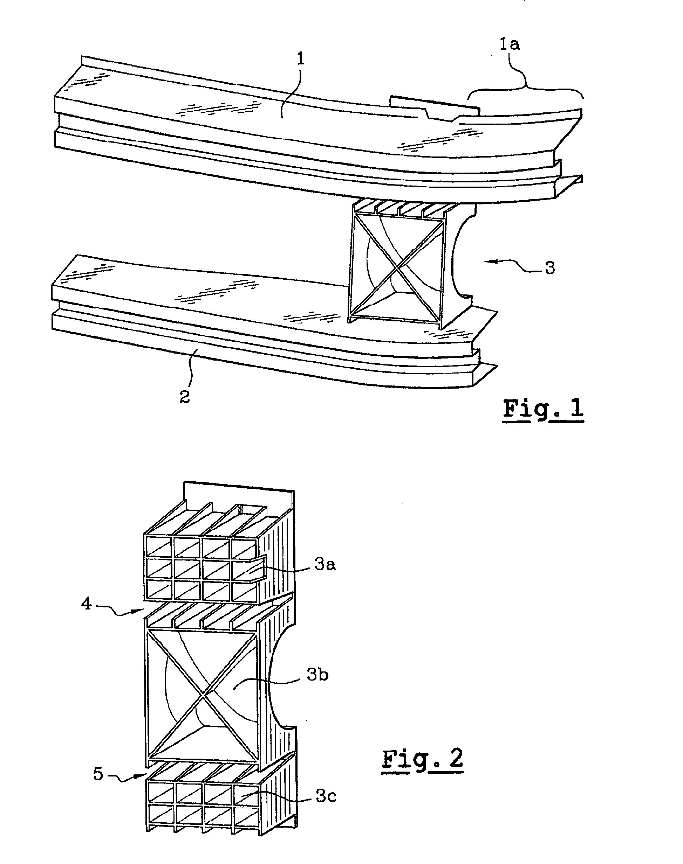

Le demi cadre représenté à la figure 1 comprend une poutre supérieure 1 et une poutre basse 2, toutes deux réalisées en matériaux composites.

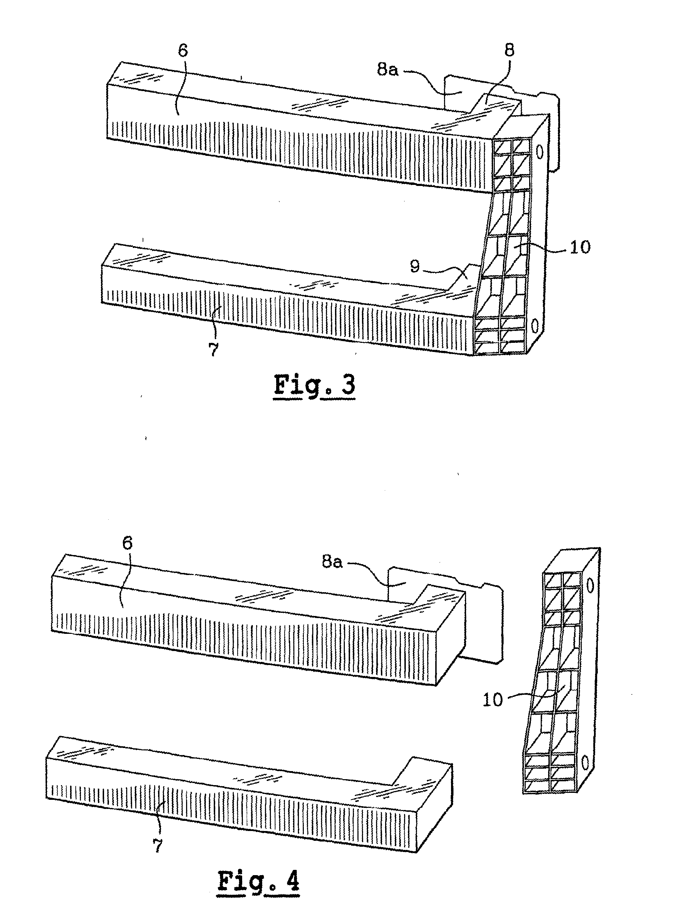

Dans cet exemple, ainsi que dans ceux des figures 3 à 6, 10 et 11, les poutres présentent une section transversale en U ou en W, avec deux ailes latérales délimitant une ouverture longitudinale dirigée vers l'intérieur du véhicule.

Ces deux poutres sont réunies par un jambage 3 réalisé en polypropylène injecté et comportant trois réseaux de nervures 3a, 3b, 3c superposés verticalement.

Le réseau de nervures intermédiaire 3b sert à rigidifier le cadre en constituant une zone de liaison entre les poutres supérieure 1 et basse 2.

Les réseaux de nervures 3a et 3c constituent des absorbeurs grâce à leur structure en nid d'abeilles.

Entre les zones nervurées 3a-3b d'une part, 3b-3c d'autre part, le jambage 3 comporte des échancrures 4, 5 à l'intérieur desquelles s'engagent les bords longitudinaux des deux poutres, lesquelles présentent, dans cet exemple, une section en U.

Ainsi, les réseaux de nervures 3a et 3c s'emboîtent au dos des poutres, c'est-à-dire par leur ouverture longitudinale dirigée vers l'intérieur du véhicule, et peuvent travailler en compression contre les longerons (non représentés) et les prolonges de berceau (non représentées) du véhicule.

La fixation des poutres 1, 2 sur le jambage 3 est assurée par des vis (non représentées) engagées verticalement dans les absorbeurs à travers les poutres.

La poutre supérieure 1 se prolonge au-delà du jambage 3 sous forme d'une amorce de crosse 1a apte à absorber des chocs en coin du véhicule.

Dans le mode de réalisation des figures 3 et 4, les poutres supérieure 6 et basse 7 sont réalisées en aluminium extrudé plié. Chaque poutre comporte un coude 8, 9 à son extrémité, de manière à se terminer par une portion qui se trouve, une fois le cadre monté sur le véhicule, dans le prolongement, d'une part des longerons, d'autre part des prolonges de berceau moteur (non représentés). Des plaques de fixation 8a terminent les coudes 8 de la poutre supérieure et permettent leur fixation par vissage sur les longerons.

Dans ce mode de réalisation, le jambage vertical 10 est réalisé en polypropylène injecté et comporte un réseau de nervures qui a ici pour fonction essentielle d'assurer la rigidification du cadre.

Le jambage 10 se fixe sur chaque poutre à l'extérieur du coude 8, 9 de celle-ci, c'est-à-dire en coin par rapport au véhicule.

Tout moyen de fixation approprié peut être utilisé et notamment un simple vissage.

Le jambage nervuré 10 ainsi disposé en coin du cadre d'absorption d'énergie sert également à l'absorption des chocs en coin du véhicule.

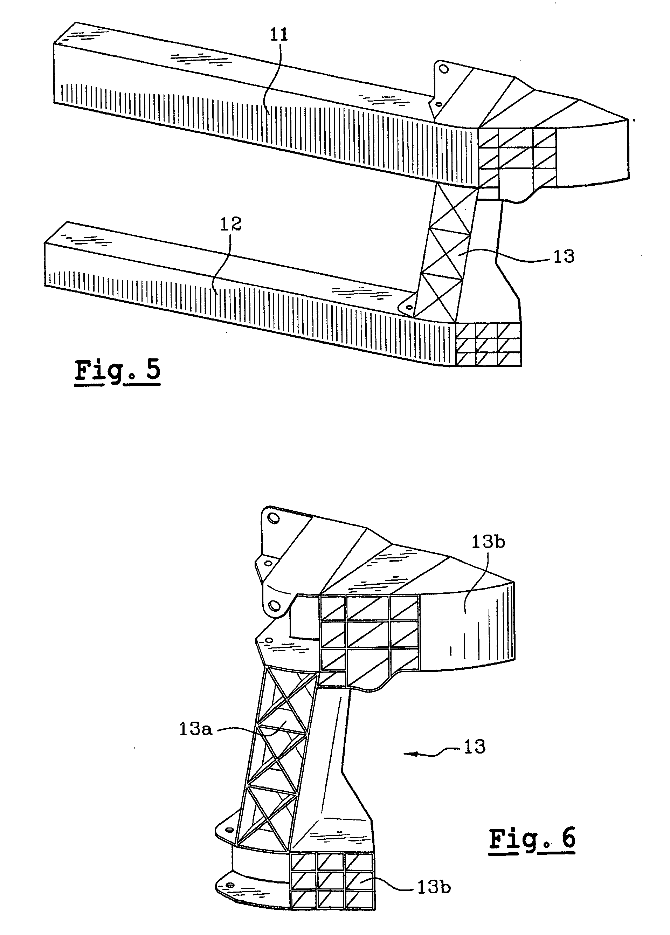

Dans le mode de réalisation des figures 5 et 6, les poutres supérieure 11 et basse 12 sont réalisées en aluminium extrudé mais sont dépourvues de coude d'extrémité à la différence des poutres 6 et 7 précédemment décrites.

Le jambage 13 comporte, d'une part, une portion verticale 13a similaire au jambage 3 du premier mode de réalisation, qui se fixe verticalement sur les poutres 11, 12 en s'emboîtant par l'arrière entre leurs ailes longitudinales, d'autre part des excroissances 13b prolongeant les poutres dans les coins du véhicule. Chaque excroissance est munie de nervures d'absorption des chocs en coin.

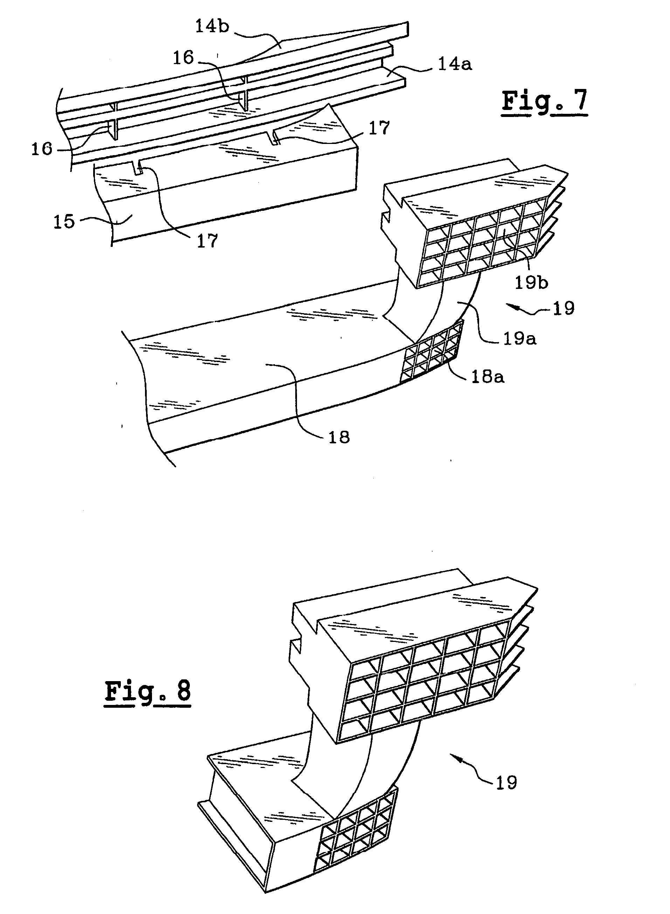

Dans le mode de réalisation des figures 7, 8 et 9, la poutre supérieure 14 est une pièce rigide obtenue par injection de matière plastique renforcée présentant une section en W ouverte vers l'avant et munie de nervures verticales de rigidification 16.

Les poutres et les jambages peuvent, dans d'autres exemples non illustrés, être obtenus par mise en oeuvre d'autres technologies.

Un absorbeur 15, qui est muni d'échancrures 17 correspondant aux nervures 16 de la poutre supérieure, est inséré entre les bords longitudinaux de cette dernière et forme, avec celle-ci, un ensemble poutre + absorbeur.

La poutre basse 18 est réalisée d'un seul tenant avec des jambages 19 dont un seul est visible sur le dessin et est obtenue par injection de polypropylène. Le jambage comporte une partie verticale de liaison nervurée 19a assurant une liaison rigide avec la poutre supérieure 14 et une excroissance 19b, située sensiblement dans le prolongement de ladite poutre supérieure.

L'excroissance 19b comporte un réseau de nervures en nid d'abeilles formant un absorbeur de chocs apte à travailler en compression.

En outre, l'excroissance 19b dépasse latéralement au-delà de la partie verticale de liaison 19a.

L'assemblage et le montage du cadre s'effectuent de la manière suivante.

La poutre supérieure 14 reçoit l'excroissance 19b du jambage par encastrement entre ses ailes longitudinales. Ladite excroissance est fixée aux longerons (non représentés) du véhicule à travers la poutre.

La poutre basse 18 est également fixée sur des prolonges (non représentées) du berceau moteur, par son extrémité 18a conformée en nid d'abeilles servant d'absorbeur de chocs en compression.

Les fixations aux longerons et prolonges de berceau peuvent être réalisés par tous moyens et notamment par vissage.

Concernant la poutre supérieure 14, il est remarquable que sa fixation par sa paroi arrière, dirigée vers l'intérieur du véhicule, laisse ses ailes longitudinales 14a, 14b s'écarter en cas de choc. Ainsi, la surface offerte aux chocs par ladite poutre est accrue et contribue à limiter les risques d'intrusion de pièces dangereuses.

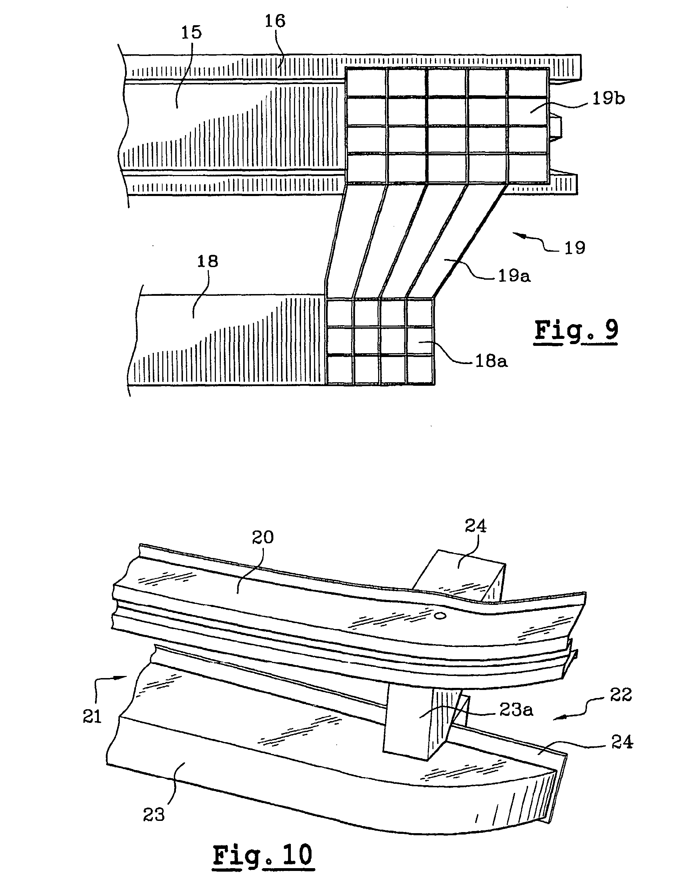

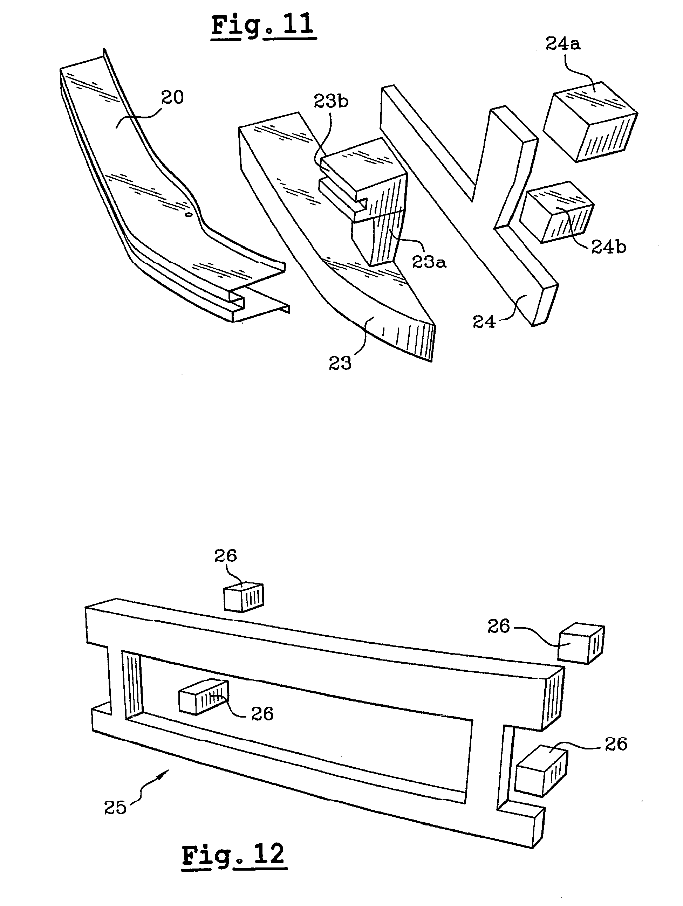

Dans le mode de réalisation des figures 10 et 11, la poutre supérieure 20 est analogue à la poutre 1 de la figure 1 tandis que la poutre basse 21 et les jambages 22 résultent de l'assemblage de deux pièces : un absorbeur 23 destiné à résister à la compression en cas de choc et une portion d'une face avant technique 24 renforcée s'étendant au dos de la poutre basse et des jambages du cadre et s'appuyant sur une prolonge de berceau 24b.

Les jambages 22 présentent ainsi la même structure que la poutre basse. Ils sont constitués sur l'absorbeur par deux prolongements verticaux 23a. Au sommet de chaque prolongement vertical 23a, une excroissance 23b en saillie vers l'avant est conformée pour s'emboîter dans la section en U de la poutre supérieure 20, au droit du longeron 24a.

Dans ce mode de réalisation, le cadre d'absorption d'énergie est partiellement constitué par la face avant technique renforcée 24 du véhicule.

Dans une variante, la face avant technique est remplacée par une simple pièce renforcée plane, métallique ou réalisée en matière plastique renforcée, qui assure la doublure de l'absorbeur 23 et de ses prolongements 23a pour constituer la poutre basse 21 et les jambages 22.

Dans le mode de réalisation de la figure 12, le cadre d'absorption d'énergie est constitué par une pièce monobloc 25 réalisée d'un seul tenant, par exemple par injection de matière plastique renforcée ou par soufflage, apte à être fixée aux prolonges et longerons du véhicule avec interposition d'absorbeurs 26 travaillant en compression.

Cette configuration est optimale du point de vue de la rigidité du cadre formant le système d'absorption d'énergie selon l'invention.

Il est bien entendu que les modes de réalisation qui viennent d'être décrits ne présentent aucun caractère limitatif. En particulier, toute modification envisageable par l'homme du métier afin d'adapter ces modes de réalisation à une application particulière ne sortirait pas du cadre de l'invention.

## Revendications

1. Système d'absorption d'énergie pour véhicule automobile, le véhicule automobile comportant des longerons (24a) et un berceau moteur, le système comportant une poutre supérieure (1, 6, 11, 14, 20, 25), une poutre basse (2, 7, 12, 18, 21, 25) et des jambages (3 10, 13, 19, 22, 25) assurant une liaison rigide entre la poutre supérieure (1, 6, 11, 14, 20, 25) et la poutre basse (2, 7, 12, 18, 21, 25), la poutre supérieure (1, 6, 11, 14, 20, 25) étant en appui contre les longerons (24a) du véhicule, **caractérisé en ce que** la poutre basse (2, 7, 12, 18, 21, 25) est en appui contre des prolonges (24b) du berceau moteur.

2. Système d'absorption d'énergie selon la revendication 1, **caractérisé en ce que** la poutre supérieure (1, 14, 20) et/ou la poutre basse (2) sont réalisées en matériaux composites.

3. Système d'absorption d'énergie selon la revendication 1 ou 2, **caractérisé en ce que** la poutre basse (7, 12) et/ou la poutre supérieure (6, 11) sont réalisées en aluminium extrudé plié.

4. Système d'absorption d'énergie selon la revendication 1, 2 ou 3, **caractérisé en ce qu'**au moins une poutre (1, 2, 6, 7, 11 12, 14, 20) présente une section transversale du type en U, c'est-à-dire avec deux ailes latérales définissant un espace intérieur à la poutre débouchant vers l'extérieur par les bords libres desdites ailes.

5. Système d'absorption d'énergie selon la revendication 4, **caractérisé en ce que** l'ouverture longitudinale de la poutre (14) est tournée vers l'avant du véhicule, une fois le système d'absorption monté sur le véhicule.

6. Système d'absorption d'énergie selon la revendication 1, 2, 3, 4 ou 5, **caractérisé en ce que** les jambages (3, 10, 13, 19, 25) sont réalisés en polypropylène injecté.

7. Système d'absorption d'énergie selon la revendication 1, 2, 3, 4, 5 ou 6, **caractérisé en ce que** chaque jambage (3, 10, 13, 19) comporte un réseau de nervures de rigidification.

8. Système d'absorption d'énergie selon la revendication 1, 2, 3, 4, 5, 6 ou 7, **caractérisé en ce que** chaque jambage (3, 13, 19, 22) comporte une partie (3a, 3b, 13a, 13b, 19b, 23b) se superposant à au moins une des poutres, partie dans laquelle il est de préférence constitué en nid d'abeilles afin de former une zone d'absorption d'énergie.

9. Système d'absorption d'énergie selon la revendication 1, 2, 3, 4, 5, 6, 7 ou 8, **caractérisé en ce que** chaque jambage (13, 19) comporte des excroissances (13b, 19b) venant dans le prolongement des poutres (13, 14), chaque excroissance constituant une zone d'absorption d'énergie destinée à absorber les chocs en coin du véhicule.

10. Système d'absorption d'énergie selon la revendication 1, 2, 3, 4, 5, 6, 7, 8 ou 9, **caractérisé en ce que** chaque jambage (10) se fixe sur chaque poutre (6, 7) à l'extérieur de celle-ci.

11. Système d'absorption d'énergie selon la revendication 1, 2, 3, 4, 5, 6, 7, 8, 9 ou 10, **caractérisé en ce que** chaque jambage (19) s'emboîte dans l'une au moins des poutres, de préférence par l'avant de celle-ci, c'est-à-dire par l'extérieur du véhicule.

12. Système d'absorption d'énergie selon la revendication 1, 2, 3, 4, 5, 6, 7, 8, 9, 10 ou 11, **caractérisé en ce que** la poutre basse (18) est réalisée d'un seul tenant avec les jambages (19).

13. Système d'absorption d'énergie selon la revendication 1, 2, 3, 4, 5, 6, 7, 8, 9, 10, 11 ou 12, **caractérisé en ce que** la poutre basse (21) et/ou les jambages (22) résultent de l'assemblage d'un absorbeur (23) destiné à résister à la compression en cas de choc et d'une pièce renforcée (24) qui double l'absorbeur et s'appuie sur la structure du véhicule.

14. Système d'absorption d'énergie selon la revendication 13, **caractérisé en ce que** la pièce renforcée est une face avant technique (24).

15. Système d'absorption d'énergie selon la revendication 1, 2, 3, 4, 5, 6, 7, 8, 9, 10, 11, 12, 13 ou 14, **caractérisé en ce que** le cadre (25) formé par la poutre supérieure, la poutre basse et les jambages, est constitué par une pièce monobloc (25) réalisée d'un seul tenant.

16. Système d'absorption d'énergie selon la revendication 1 , 2, 3, 4, 5, 6, 7, 8, 9, 10, 11, 12, 13, 14 ou 15, **caractérisé en ce que** la poutre supérieure (1, 6, 11, 14, 20, 25) et la poutre basse (2, 7, 12, 18, 21, 25) sont sensiblement horizontales.

17. Système d'absorption d'énergie selon la revendication 1, 2, 3, 4, 5, 6, 7, 8, 9, 10, 11, 12, 13, 14, 15 ou 16, **caractérisé en ce que** les jambages (3, 10, 13, 19, 22, 25) sont sensiblement verticaux.

## Claims

1. An energy absorber system for a motor vehicle, the motor vehicle including side rails (24a) and an engine cradle, the system including a top beam (1, 6, 11, 14, 20, 25), a bottom beam (2, 7, 12, 18, 21, 25), and uprights (3, 10, 13, 19, 22, 25) providing a rigid connection between the top beam (1, 6, 11, 14, 20, 25) and the bottom beam (2, 7, 12, 18, 21, 25), the top beam (1, 6, 11, 14, 20, 25) bearing against the side rails (24a) of the vehicle, the system being **characterized in that** the bottom beam (2, 7, 12, 18, 21, 25) bears against extensions (24b) of the engine cradle.

2. An energy absorber system according to claim 1, **characterized in that** the top beam (1, 14, 20) and/or the bottom beam (2) are made of composite materials.

3. An energy absorber system according to claim 1 or claim 2, **characterized in that** the bottom beam (7, 12) and/or the top beam (6, 11) are made of folded extruded aluminum.

4. An energy absorber system according to claim 1, 2, or 3, **characterized in that** at least one beam (1, 2, 6, 7, 11, 12, 14, 20) presents a cross-section of the channel-section type, i.e. with two side flanges defining a space inside the beam that opens to the outside via the free edges of said flanges.

5. An energy absorber system according to claim 4, **characterized in that** the longitudinal opening of the beam (14) faces towards the front of the vehicle once the absorber system is mounted on the vehicle.

6. An energy absorber system according to claim 1, 2, 3, 4, or 5, **characterized in that** the uprights (3, 10, 13, 19, 25) are made of injection-molded polypropylene.

7. An energy absorber system according to claim 1, 2, 3, 4, 5, or 6, **characterized in that** each upright (3, 10, 13, 19) includes an array of stiffener ribs.

8. An energy absorber system according to claim 1, 2, 3, 4, 5, 6, or 7, **characterized in that** each upright (3, 13, 19, 22) includes a portion (3a, 3b, 13a, 13b, 19b, 23b) superposed on at least one of the beams, in which portion the upright is preferably constituted by a honeycomb in order to form an energy absorption zone.

9. An energy absorber system according to claim 1, 2, 3, 4, 5, 6, 7, or 8, **characterized in that** each upright (13, 19) includes projections (13b, 19b) extending the beams (13, 14), each projection constituting an energy absorption zone for absorbing impacts on a corner of the vehicle.

10. An energy absorber system according to claim 1, 2, 3, 4, 5, 6, 7, 8, or 9, **characterized in that** each upright (10) is fastened to each beam (6, 7) on the outside thereof.

11. An energy absorber system according to claim 1, 2, 3, 4, 5, 6, 7, 8, 9, or 10, **characterized in that** each upright (19) is engaged in at least one of the beams, preferably via the front thereof, from outside the vehicle.

12. An energy absorber system according to claim 1, 2, 3, 4, 5, 6, 7, 8, 9, 10, or 11, **characterized in that** the bottom beam (18) is made integrally with the uprights (19).

13. An energy absorber system according to claim 1, 2, 3, 4, 5, 6, 7, 8, 9, 10, 11, or 12, **characterized in that** the bottom beam (21) and/or the uprights (22) are the result of assembling an absorber (23) for withstanding compression in the event of an impact with a reinforced part (24) that lines the absorber and that bears against the structure of the vehicle.

14. An energy absorber system according to claim 13, **characterized in that** the reinforced part is a front panel (24).

15. An energy absorber system according to claim 1, 2, 3, 4, 5, 6, 7, 8, 9, 10, 11, 12, 13, or 14, **characterized in that** the frame (25) formed by the top beam, the bottom beam, and the uprights, is constituted by a one-piece unit (25) formed integrally.

16. An energy absorber system according to claim 1, 2, 3, 4, 5, 6, 7, 8, 9, 10, 11, 12, 13, 14, or 15 **characterized in that** the top beam (1, 6, 11, 14, 20, 25) and the bottom beam (2, 7, 12, 18, 21, 25) are substantially horizontal.

17. An energy absorber system according to claim 1, 2, 3, 4, 5, 6, 7, 8, 9, 10, 11, 12, 13, 14, 15, or 16, **characterized in that** the uprights (3, 10, 13, 19, 22, 25) are substantially vertical.

## Patentansprüche

1. Energieaufnehmende Einrichtung für ein Kraftfahrzeug, wobei das Kraftfahrzeug Längsträger (24a) und einen Motorhilfsrahmen umfasst, und die Einrichtung einen oberen Träger (1, 6, 11, 14, 20, 25), einen unteren Träger (2, 7, 12, 18, 21, 25) und Ständer (3, 10, 13, 10, 22, 25) umfasst, die eine steife Verbindung zwischen dem oberen Träger (1, 6, 11, 14, 20, 25) und dem unteren Träger (2, 7, 12, 18, 21, 25) gewährleisten, wobei sich der obere Träger (1, 6, 11, 14, 20, 25) an den Längsträgern (24a) des Fahrzeugs abstützt, **dadurch gekennzeichnet, dass** sich der untere Träger (2, 7,12,18, 21, 25) an den Verlängerungen (24b) des Motorhilfsrahmens abstützt.

2. Energieaufnehmende Einrichtung nach Anspruch 1, **dadurch gekennzeichnet, dass** der obere Träger (1, 14, 20) und/oder der untere Träger (2) aus Verbundstoffen bestehen.

3. Energieaufnehmende Einrichtung nach Anspruch 1 oder 2, **dadurch gekennzeichnet, dass** der untere Träger (7, 12) und/oder der obere Träger (6, 11) aus stranggepresstem, gebogenem Aluminium bestehen.

4. Energieaufnehmende Einrichtung nach Anspruch 1, 2 oder 3, **dadurch gekennzeichnet, dass** wenigstens ein Träger (1, 2, 6, 7, 11 12, 14, 20) einen Querschnitt in U-Form aufweist, das heißt zwei Seitenflügel umfassen einen Innenraum des Trägers, der nach außen durch die offenen Ränder der genannten Flügel mündet.

5. Energieaufnehmende Einrichtung nach Anspruch 4, **dadurch gekennzeichnet, dass** die Längsöffnung des Trägers (14) zur Vorderseite des Fahrzeugs zeigt, sobald die aufnehmende Einrichtung am Fahrzeug montiert ist.

6. Energieaufnehmende Einrichtung nach Anspruch 1, 2, 3, 4 oder 5, **dadurch gekennzeichnet, dass** die Ständer (3,10,13,19, 25) aus Spritzgusspropylen bestehen.

7. Energieaufnehmende Einrichtung nach Anspruch 1, 2, 3, 4, 5 oder 6, **dadurch gekennzeichnet, dass** jeder Ständer (3,10,13,19) ein Netz aus Versteifungsrippen aufweist.

8. Energieaufnehmende Einrichtung nach Anspruch 1, 2, 3, 4, 5, 6 oder 7, **dadurch gekennzeichnet, dass** jeder Ständer (3, 13, 19, 22) einen Teil (3a, 3b, 13a, 13b, 19b, 23b) aufweist, der wenigstens einen der Träger überlagert, wobei der Teil vorzugsweise aus Waben besteht, um eine energieaufnehmende Zone zu bilden.

9. Energieaufnehmende Einrichtung nach Anspruch 1, 2, 3, 4, 5, 6, 7 oder 8, **dadurch gekennzeichnet, dass** jeder Ständer (13, 19) Ausbauchungen (13b, 19b) aufweist, die aus der Verlängerung der Träger (13, 14) ragen, wobei jede Ausbauchung eine energieaufnehmende Zone zur Aufnahme eines Aufpralls an einer Ecke des Fahrzeugs darstellt.

10. Energieaufnehmende Einrichtung nach Anspruch 1, 2, 3, 4, 5, 6, 7, 8 oder 9, **dadurch gekennzeichnet, dass** jeder Ständer (10) an jedem Träger (6, 7) an der Außenseite von diesem befestigt ist.

11. Energieaufnehmende Einrichtung nach Anspruch 1, 2, 3, 4, 5, 6, 7, 8, 9 oder 10, **dadurch gekennzeichnet, dass** jeder Ständer (19) wenigstens in einen der Träger passt, vorzugsweise an der Vorderseite von diesem, das heißt an der Außenseite des Fahrzeugs.

12. Energieaufnehmende Einrichtung nach Anspruch 1, 2, 3, 4, 5, 6, 7, 8, 9, 10 oder 11, **dadurch gekennzeichnet, dass** der untere Träger (18) durchgehend mit den Ständern (19) ausgeführt ist.

13. Energieaufnehmende Einrichtung nach Anspruch 1, 2, 3, 4, 5, 6, 7, 8, 9, 10, 11 oder 12, **dadurch gekennzeichnet, dass** der untere Träger (21) und/oder die Ständer (22) aus der Montage mit einem Dämpfer (23) zum Widerstand gegen das Zusammendrücken bei einem Aufprall und einem verstärkten Teil (24), das den Dämpfer verstärkt und sich an der Struktur des Fahrzeugs abstützt, resultieren.

14. Energieaufnehmende Einrichtung nach Anspruch 13, **dadurch gekennzeichnet, dass** das verstärkte Teil eine technische Außentraverse (24) darstellt.

15. Energieaufnehmende Einrichtung nach Anspruch 1, 2, 3, 4, 5, 6, 7, 8, 9, 10, 11, 12, 13 oder 14, **dadurch gekennzeichnet, dass** der durch den oberen Träger, den unteren Träger und die Ständer gebildete Rahmen (25) aus einem durchgehenden einteiligen Teil (25) besteht.

16. Energieaufnehmende Einrichtung nach Anspruch 1, 2, 3, 4, 5, 6, 7, 8, 9,10, 11, 12, 13, 14 oder 15, **dadurch gekennzeichnet, dass** der obere Träger (1, 6, 11, 14, 20, 25) und der untere Träger (2, 7, 12, 18, 21, 25) in etwa waagrecht sind.

17. Energieaufnehmende Einrichtung nach Anspruch 1, 2, 3, 4, 5, 6, 7, 8, 9, 10, 11, 12, 13, 14, 15 oder 16, **dadurch gekennzeichnet, dass** die Ständer (3, 10, 13, 19, 22, 25) in etwa senkrecht sind.
